# FASCICULE DE BREVET EUROPEEN

(11) **EP 2 053 275 B1**
(45) Date de publication et mention de la délivrance du brevet: **22.09.2010**
(21) Numéro de dépôt: 08165871.8
(22) Date de dépôt: 03.10.2008
(51) Int. Cl.: F16H 59/70

(54) **Dispositif de detection de point mort pour les commande interne de boite de vitesses**
Vorrichtung zur Erkennung des Totpunkts für die interne Steuerung eines Schaltgetriebes
Neutral detection device for internal gearbox control

(30) Priorité: 25.10.2007 FR 0758587
(43) Date de publication de la demande: 29.04.2009
(73) Titulaire: Peugeot Citroën Automobiles SA, 78140 Vélizy-Villacoublay (FR)
(72) Inventeur: Ploe, Pierre, 92800 Puteaux (FR)

(56) Documents cités:
- EP-A- 1 617 109
- DE-U1- 9 116 855
- FR-A- 2 902 853
- GB-A- 2 311 570
- US-A- 3 242 280

## Description

La présente invention concerne un dispositif de commande interne pour une boîte de vitesses d'un véhicule automobile, et se rapporte plus particulièrement à un dispositif de détection de point mort pour cette commande interne.

Les boîtes de vitesses manuelles des véhicules automobiles, comportent un premier arbre moteur lié au moteur du véhicule par un embrayage, et un deuxième arbre parallèle récepteur, lié aux roues motrices du véhicule. Ces arbres peuvent être reliés entre eux par des couples de pignons formant un engrenage transmettant le mouvement de l'un à l'autre suivant différents rapports de démultiplication, correspondant respectivement à autant de rapports de vitesse.

Un des pignons de chaque engrenage est solidaire d'un des arbres, l'autre pignon de l'engrenage monté libre en rotation sur l'autre arbre, peut être rendu solidaire de son arbre par le coulissement axial d'un manchon de synchronisation. Ce coulissement réalise d'abord une synchronisation des vitesses des deux éléments par un dispositif de synchronisation comportant des cônes de frottement, puis un crabotage assurant la solidarisation du pignon sur l'arbre.

Chaque manchon de synchronisation peut commander l'engagement d'un ou de deux rapports, disposés axialement sur les côtés du manchon. De plus, un rapport de marche arrière réalise une inversion du sens de marche de l'arbre récepteur.

Une position particulière de la commande de boîte de vitesses correspond au point mort, aucun rapport n'étant engagé.

Pour l'engagement des rapports de vitesse, un levier de vitesse déplacé par le conducteur, réalise un mouvement de sélection pour sélectionner un des axes portant une fourchette de commande d'un manchon, puis un mouvement de passage pour engager un rapport par coulissement axial de ce manchon.

Les véhicules récents peuvent comporter des systèmes de démarrage automatisés du moteur thermique, comprenant par exemple un démarrage par bouton poussoir en remplacement de la clé de contact qui est tournée, ou un démarrage par un atternateur-démarreur, qui coupe et remet automatiquement en marche le moteur quand le véhicule est à l'arrêt.

Ces systèmes de démarrage mettent en oeuvre une séquence électronique qui lance un cycle de démarrage. Cette séquence nécessite la mise en place d'un système de sécurité garantissant qu'aucun rapport de vitesse ne soit engagé au démarrage de la séquence, ni ne s'engage pendant son déroulement. Ce système de sécurité est réalisé par la détection de la position du point mort de la commande interne de la boîte de vitesses.

L'état de la technique le plus proche est représenté dans le document EP 1 617 109 qui décrit le préambule de la revendication 1.

Suivant une disposition connue présentée notamment dans le document FR-0605779, un capteur de position est lié à un carter de boîte de vitesses. Une tige métallique, formant une cible pour le capteur, est fixée radialement sur un axe de commande réalisant des mouvements de translation et de rotation, pour effectuer une sélection ou un passage des rapports de vitesse. Suivant l'orientation de l'axe de commande, la tige vient s'aligner sur le capteur, son extrémité formant la cible qui est détectée par ce capteur.

On obtient ainsi une information qui confirme une position bien définie de l'axe de commande, correspondant au point mort de la boîte de vitesses.

La tige formant la cible est un composant métallique directement rapporté sur l'axe de commande, par exemple par vissage ou soudure, pour former un ensemble rigide. Un inconvénient principal de ce type d'assemblage, est qu'il ne permet pas de prévoir facilement des variantes de forme, de dimension ou de position pour cette cible. Notamment pour l'outil industriel de production en grande série, il faut prévoir des adaptations pour ces variantes, qui peuvent être coûteuses.

La présente invention a notamment pour but d'éviter ces inconvénients de la technique antérieure, et de proposer un moyen de liaison d'une cible sur un axe de commande, qui permette de produire facilement un ensemble pouvant comporter différentes variantes de cibles.

Elle propose à cet effet un dispositif de détection de point mort de commande interne de boîte de vitesses, comportant un doigt de passage lié à un axe de passage, qui déplace des axes de fourchettes pour la commande de manchons de passage des vitesses, cette boîte de vitesses comportant en outre un capteur de position lié à son carter, et une cible liée au doigt de passage, ledit capteur étant apte à détecter une position de point mort quand la cible est détectée par le capteur, **caractérisé en ce qu**'il comporte une pièce de liaison surmoulée, obtenue par moulage d'une matière plastique autour de parties de la cible et du doigt de passage.

Un avantage de la commande de boîte de vitesses selon l'invention, est que le doigt de passage peut rester un composant standard pouvant recevoir par un même procédé d'assemblage, un surmoulage, différentes cibles comportant des formes variées.

La commande de boîte de vitesses selon l'invention peut en outre comporter une ou plusieurs des caractéristiques suivantes, qui peuvent être combinées entre elles.

Selon une caractéristique de l'invention, le doigt de passage comporte un point d'ancrage pour le surmoulage de la pièce de liaison, ledit point d'ancrage faisant saillie du doigt de passage dans un plan partagé par la cible.

La pièce de liaison peut comporter un bras qui s'étend en direction du capteur, la cible étant fixée à l'extrémité du bras pour la déporter du doigt de passage.

En variante, la pièce de liaison peut supporter une came coopérant avec une bille poussée par un ressort, d'une douille à bille liée au carter de la boîte de vitesses.

La pièce de liaison peut être conformée pour recevoir la came comportant une surface à trois dimensions, comprenant suivant un plan vertical, une forme en V comportant un creux central, et suivant un plan horizontal, une forme en V comportant un bossage central, comprenant au centre de cette bosse une rainure s'étendant verticalement.

Avantageusement, les pièces reliées entre elles par la pièce de liaison, comportent des excroissances qui assurent la prise dans la pièce de liaison.

Selon une disposition particulière, la cible comporte une tige métallique Avantageusement, la pièce de liaison est réalisée par surmoulage d'une matière plastique de la famille des polyamides.

Avantageusement, le capteur de position est un capteur à effet hall.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente en perspective, une commande interne d'une boîte de vitesses, intégrant le dispositif de détection de point mort selon l'invention ;
- la figure 2 présente une vue de détail du dispositif de détection selon l'invention, comprenant le capteur et la cible ; et
- les figures 3 et 4 présentent le dispositif de détection selon l'invention avec ses composants mis en place, successivement avant le surmoulage d'une pièce de liaison, et après le surmoulage.

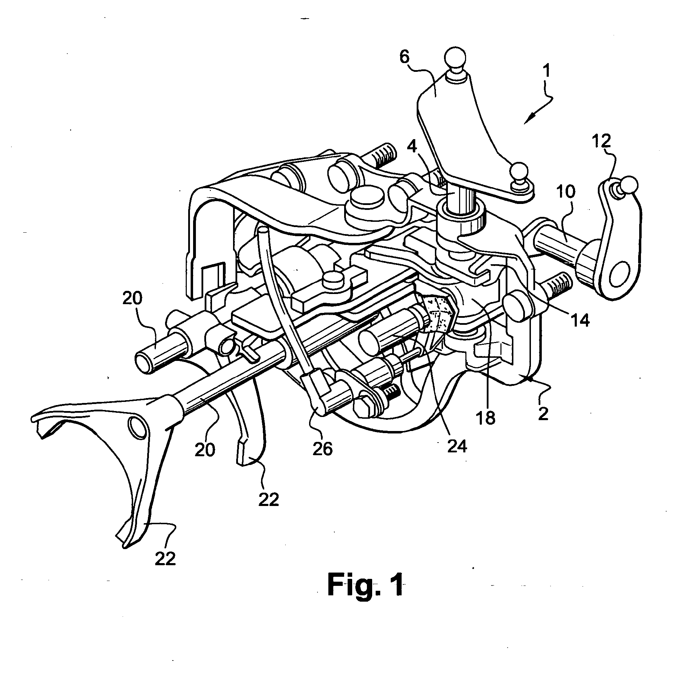

La figure 1 présente une commande interne 1 d'une boîte de vitesses comprenant un premier arbre moteur non représenté, lié au moteur du véhicule par un embrayage, et un deuxième arbre récepteur non représenté, disposé parallèlement. L'arbre moteur supporte des pignons fixes engrenant avec des pignons libres de l'arbre récepteur, qui peuvent être engagés par des manchons de synchronisation pour réaliser différents rapports de vitesse.

Un support 2 fixé à l'intérieur du carter de la boîte de vitesses,-supporte l'ensemble du dispositif de commande interne. Un axe de passage 4 disposé verticalement, reçoit à son extrémité supérieure sortant de la boîte de vitesses, un bras de commande 6 comportant une rotule reliée au mouvement de passage du levier de changement de vitesses, qui est actionné par le conducteur.

Pour la description de l'ensemble des figures, l'axe de passage 4 est considéré comme étant toujours disposé verticalement suivant la représentation de la figure 1, alors que dans le véhicule il pourrait avoir une autre inclinaison.

Un axe de sélection 10 disposé horizontalement, reçoit à son extrémité extérieure sortant de la boîte de vitesses, un bras de commande 12 comportant une rotule reliée au mouvement de sélection du levier de changement de vitesses, et à son extrémité intérieure, un bras de sélection 14 faisant coulisser verticalement une clé d'interverrouillage, qui contient un doigt de passage 18 lié en rotation à l'axe de passage 4.

Le doigt de passage 18 est ainsi mis successivement à la hauteur de moyens d'entraînement de différents axes de fourchettes 20, appelés aussi noix de fourchettes, qui sont superposés. Chaque axe de fourchette 20 supporte une fourchette 22. La clé d'interverrouillage comporte des formes qui après la sélection d'une noix de fourchette, empêchent un mouvement accidentel des autres noix par un pivotement du doigt de passage 18 qui serait mal positionné en hauteur, pour éviter un passage simultané de deux rapports.

Les noix de fourchettes superposées comportent successivement dans cet exemple, suivant un axe vertical, une noix pour une fourchette d'actionnement d'un manchon de passage des premier et deuxième rapports, une noix pour une fourchette des troisième et quatrième rapports, et une noix pour une fourchette du cinquième rapport et de la marche arrière.

La commande de boîte 1 comporte aussi une douille à bille 24 liée au support 2, comprenant une bille de positionnement du doigt de passage 18, et un capteur de position 26.

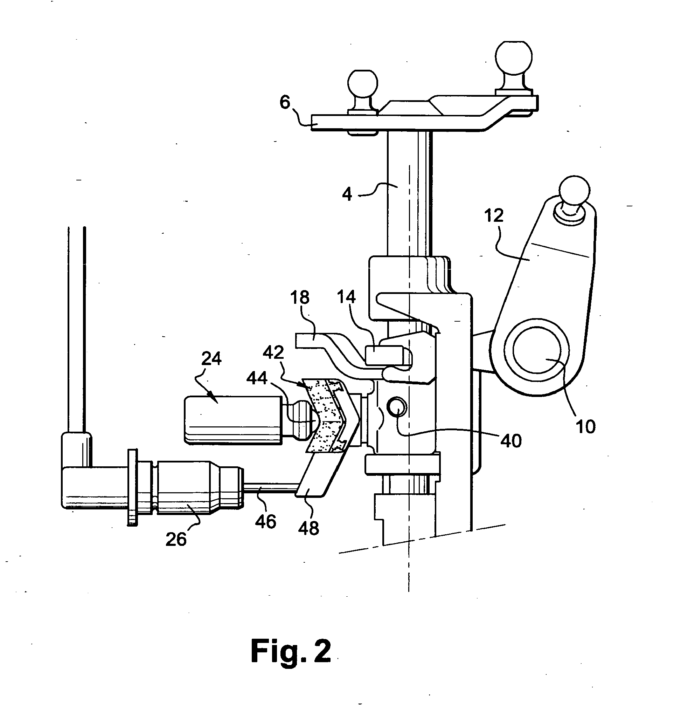

La figure 2 présente le doigt de passage 18 réalisé en acier, par exemple par moulage ou frittage d'une poudre métallique, comportant un perçage recevant l'axe de passage 4, une goupille élastique 40 assurant le blocage de cette liaison.

Le doigt de passage supporte une came 42 formant une surface à trois dimensions, comprenant suivant un plan vertical, une forme en V comportant un creux central, et suivant un plan horizontal, une forme en V comportant un bossage central. De plus le bossage en V situé dans un plan horizontal, comporte dans sa partie centrale une rainure s'étendant verticalement.

La douille à bille 24 comporte un piston cylindrique coulissant dans un alésage, ce piston poussé par un ressort hélicoïdal, comprend une bille 44 qui dépasse à son extrémité libre. La bille 44 est poussée en permanence par le ressort sur la surface de la came 42, pour effectuer un verrouillage de l'axe de passage 4 dans certaines positions.

Pour des mouvements verticaux de sélection, la bille 44 tend à tomber dans le creux formé au centre du V du plan vertical de la surface de la came 42, ce qui maintient l'axe de passage 4 dans une position de sélection intermédiaire correspondant pour le doigt de passage 18, à la hauteur de la noix de passage des troisième et quatrième rapports.

Pour des mouvements de rotation effectués pour les passages, la bille 44 peut tendre à repousser le doigt de passage 18 d'un côté ou de l'autre, sur les pentes extérieures du V formé dans le plan horizontal de la surface de la came 42, pour confirmer la position d'un manchon de passage, et l'engagement d'un rapport d'un côté ou de l'autre du manchon. La bille 44 peut aussi en tombant dans la rainure centrale s'étendant verticalement, maintenir l'axe de passage 4 dans une position angulaire centrale, qui correspond à un couloir de point mort.

On réalise ainsi en interne, un maintien de la commande de boîte sur un couloir de sélection correspondant au point mort, et sur un couloir de passage correspondant aux troisième et quatrième rapports.

Le doigt de passage supporte par ailleurs une cible métallique 46, comprenant une tige fixée sensiblement radialement. Dans une position de point mort telle que maintenue par la douille à bille 24, la tige de la cible 46 est axialement alignée sur le capteur 26, son extrémité radialement extérieure venant très près de l'extrémité du capteur.

De préférence, le capteur 26 est à effet hall. Il détecte sans contact et donc sans usure, la proximité de l'extrémité de la cible métallique 46, et envoie un signal à un calculateur électronique non représenté, pour permettre d'effectuer certaines opérations comme par exemple le démarrage du moteur thermique.

En utilisant, pour la cible 46, une tige d'une certaine longueur, son extrémité servant à la détection est éloignée de l'axe de passage 4, et on obtient une grande précision dans la détection de la position angulaire de cet axe de passage.

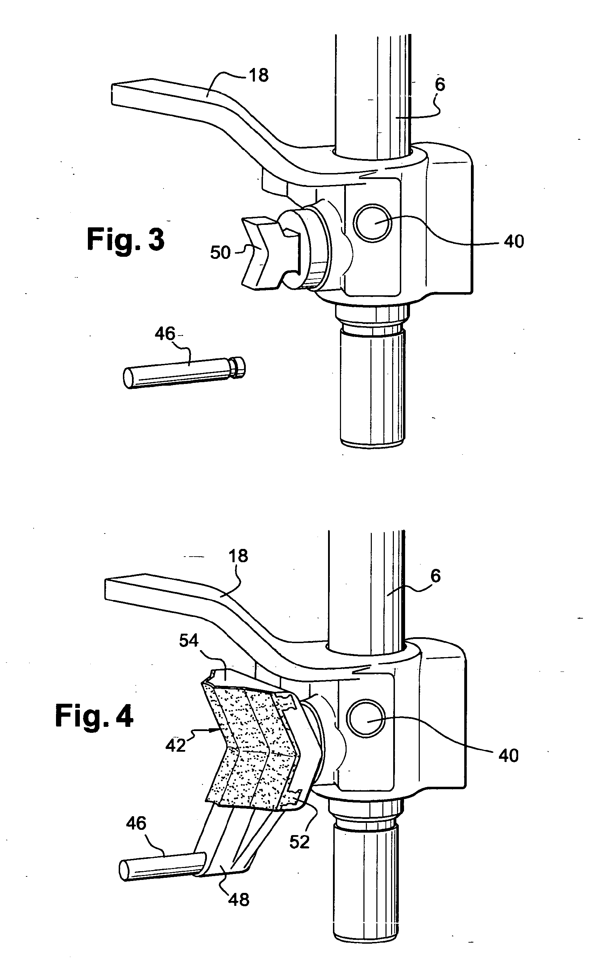

Les figures 3 est 4 détaillent l'assemblage de la came 42 et de la cible 46, sur un point d'ancrage 50 du doigt de passage 18. Cet assemblage est réalisé par le surmoulage d'une pièce de liaison 54, comprenant par exemple une matière thermoplastique comme un polyamide qui résiste bien aux conditions de fonctionnement des boîtes de vitesses.

Le point d'ancrage 50 est conformé pour présenter globalement la forme d'un Y, dont les deux branches sont aptes à recevoir la came 42, qui a un profil en V venant épouser ces branches du Y. La came 42, réalisée par exemple avec une poudre métallique frittée, ou à partir d'une tôle, comprend avantageusement sur sa face destinée à être liée par surmoulage avec le point d'ancrage, des excroissances servant d'autant de points d'accrochage pour le surmoulage. Il en est de même sur l'extrémité radialement intérieure de la tige de la cible 46, qui comporte par exemple une rainure circulaire.

Pour la réalisation de la pièce de liaison 54, on positionne dans un moule les différents composants à lier, dans ce cas la came 42, la tige de cible 46 et le point d'ancrage 50, puis on injecte la matière qui recouvre les points d'accrochage pour après refroidissement, obtenir des pièces solidement liées entre elles et positionnées avec précision. On peut réaliser ainsi des formes complexes, avec par exemple une tige de cible 46 fixée au bout d'un bras 48, pour l'éloigner du doigt de passage 18.

On peut ainsi réaliser facilement par surmoulage, une diversité d'ensembles, en gardant par exemple un doigt de passage 18 standard auquel on reliera différents types de came 42, ou différentes cibles 46 de capteur avec des dimensions variées. On peut aussi prévoir des versions ne recevant pas de cible 46, pour des boîtes de vitesses sans capteur 26, ne comportant par exemple pas de démarrage automatisé du moteur thermique.

De plus, on peut facilement utiliser différents matériaux distincts, appropriés aux caractéristiques particulières des fonctions de chaque composant relié ensemble. En particulier, on peut rapporter de manière économique, une came réalisée dans un métal résistant à l'usure, en utilisant une seule opération de surmoulage prévue pour fixer la cible.

D'une manière générale et dans le cadre de l'invention, on peut inverser des structures de la commande de la boîte de vitesses, par exemple en utilisant pour le doigt de passage 18, une rotation pour la sélection, et un coulissement pour le passage.

## Revendications

1. Dispositif de détection de point mort de commande interne de boîte de vitesses, comportant un doigt de passage (18) lié à un axe de passage (4), qui déplace des axes de fourchettes (20) pour la commande de manchons de passage des vitesses, cette boîte de vitesses comportant en outre un capteur de position (26) lié à son carter, et une cible (46) liée au doigt de passage (18), ledit capteur (26) étant apte à détecter une position de point mort quand la cible (46) est détectée par le capteur (26), **caractérisé en ce qu'**il comporte une pièce de liaison (54) surmoulée, obtenue par moulage d'une matière plastique autour de parties de la cible (46) et du doigt de passage (18).

2. Dispositif de détection de point mort selon la revendication 1, **caractérisé en ce que** le doigt de passage (18) comporte un point d'ancrage (50) pour le surmoulage de la pièce de liaison (54), ledit point d'ancrage faisant saillie du doigt de passage dans un plan partagé par la cible (46).

3. Dispositif de détection de point mort selon l'une des revendications 1 ou 2, **caractérisé en ce que** la pièce de liaison (54) comporte un bras (48) qui s'étend en direction du capteur (26), la cible (46) étant fixée à l'extrémité du bras pour la déporter du doigt de passage (18).

4. Dispositif de détection de point mort selon l'une quelconque des revendications précédentes, **caractérisé en ce que** la pièce de liaison (54) supporte une came (42) coopérant avec une bille (44) poussée par un ressort, d'une douille à bille (24) liée au carter de la boîte de vitesses.

5. Dispositif de détection de point mort selon les revendications 2 et 4, **caractérisé en ce que** la pièce de liaison (54) est conformée pour recevoir la came (42) comportant une surface à trois dimensions, comprenant suivant un plan vertical, une forme en V comportant un creux central, et suivant un plan horizontal, une forme en V comportant un bossage central, comprenant au centre de cette bosse une rainure s'étendant verticalement.

6. Dispositif de détection de point mort selon l'une quelconque des revendications précédentes, **caractérisé en ce que** les pièces reliées entre elles par la pièce de liaison (54), comportent des excroissances (52) qui assurent la prise dans la pièce de liaison (54).

7. Dispositif de détection de point mort selon l'une quelconque des revendications précédentes, **caractérisé en ce que** la cible (46) comporte une tige métallique

8. Dispositif de détection de point mort selon l'une quelconque des revendications précédentes, **caractérisé en ce que** la pièce de liaison (54) est réalisée par surmoulage d'une matière plastique de la famille des polyamides.

9. Dispositif de détection de point mort selon l'une quelconque des revendications précédentes, **caractérisé en ce que** le capteur de position (26) est un capteur à effet hall.

## Claims

1. Detection device of the dead centre of an internal control of a gearbox, comprising a gear change pin (18) connected to a gear change shaft (4), which moves shift rails (20) for controlling gear shift sleeves, this gearbox further comprising a position sensor (26) connected to its casing, and a target (46) connected to the gear change pin (18), the said sensor (26) being suited to detect a dead centre position when the target (46) is detected by the sensor (26), **characterized in that** it comprises an overmoulded connecting piece (54), obtained by moulding a plastic material around parts of the target (46) and of the gear change pin (18).

2. Detection device of the dead centre according to Claim 1, **characterized in that** the gear change pin (18) comprises an anchoring point (50) for the overmoulding of the connecting piece (54), the said anchoring point projecting from the gear change pin in a plane shared by the target (46).

3. Detection device of the dead centre according to one of Claims 1 or 2, **characterized in that** the connecting piece (54) comprises an arm (48) which extends towards the sensor (26), the target (46) being fixed at the end of the arm for offsetting it from the gear change pin (18).

4. Detection device of the dead centre according to any one of the preceding claims, **characterized in that** the connecting piece (54) supports a cam (42) cooperating with a ball (44) pushed by a spring, of a ball socket (24) connected to the casing of the gearbox.

5. Detection device of the dead centre according to Claims 2 and 4, **characterized in that** the connecting piece (54) is shaped to receive the cam (42) comprising three-dimensional surface, comprising according to a vertical plane, a V-shape comprising a central recess, and according to a horizontal plane, a V-shape comprising a central boss, including in the centre of this boss a groove extending vertically.

6. Detection device of the dead centre according to any one of the preceding claims, **characterized in that** the pieces which are connected with each other by the connecting piece (54) include excrescences (52) which ensure a hold in the connecting piece (54).

7. Detection device of the dead centre according to any one of the preceding claims, **characterized in that** the target (46) comprises a metallic rod.

8. Detection device of the dead centre according to any one of the preceding claims, **characterized in that** the connecting piece (54) is realized by overmoulding of a plastic material of the family of polyamides.

9. Detection device of the dead centre according to any one of the preceding claims, **characterized in that** the position sensor (26) is a Hall effect sensor.

## Patentansprüche

1. Vorrichtung zum Erfassen des inneren Steuertotpunkts eines Schaltgetriebes, die einen Schaltfinger (18) aufweist, der mit einer Schaltachse (4) verbunden ist, die Achsen von Gabeln (20) zum Steuern von Gangschalthülsen verlagert, wobei dieses Schaltgetriebe ferner einen Positionssensor (26) aufweist, der mit seinem Gehäuse verbunden ist, und ein Ziel (46), das mit dem Schaltfinger (18) verbunden ist, wobei der Sensor (26) in der Lage ist, eine Totpunktposition zu erfassen, wenn das Ziel (46) von dem Sensor (26) erfasst wird, **dadurch gekennzeichnet, dass** sie einen abgeformten Verbindungsteil (54) aufweist, der durch Formen eines Plastiks um Teile des Ziels (46) und des Schaltfingers (18) erzielt wird.

2. Vorrichtung zum Erfassen des Totpunkts nach Anspruch 1, **dadurch gekennzeichnet, dass** der Schaltfinger (18) einen Verankerungspunkt (50) für das Abformen des Verbindungsteils (54) aufweist, wobei der Verankerungspunkt von dem Schaltfinger in einer Ebene, die er mit dem Ziel (46) teilt, vorragt.

3. Vorrichtung zum Erfassen des Totpunkts nach einem der Ansprüche 1 oder 2, **dadurch gekennzeichnet, dass** der Verbindungsteil (54) einen Arm (48) aufweist, der sich in Richtung des Sensors (26) erstreckt, wobei das Ziel (46) am Ende des Arms befestigt ist, um es von dem Schaltfinger (18) zu verlagern.

4. Vorrichtung zum Erfassen des Totpunkts nach einem der vorhergehenden Ansprüche, **dadurch gekennzeichnet, dass** der Verbindungsteil (54) eine Nocke (42) aufweist, die mit einer Kugel (44) zusammenwirkt, die von einer Feder einer Kugelhülse (24), die mit dem Gehäuse des Schaltgetriebe verbunden ist, geschoben wird.

5. Vorrichtung zum Erfassen des Totpunkts nach den Ansprüchen 2 und 4, **dadurch gekennzeichnet, dass** der Verbindungsteil (54) ausgebildet ist, um die Nocke (42) aufzunehmen, die eine dreidimensionale Oberfläche aufweist, die entlang einer vertikalen Ebene eine V-Form aufweist, die eine zentrale Vertiefung aufweist, und entlang einer horizontalen Ebene eine V-Form, die einen zentralen Höcker aufweist, mit, in der Mitte dieses Höckers, einer Rille, die sich vertikal erstreckt.

6. Vorrichtung zum Erfassen des Totpunkts nach einem der vorhergehenden Ansprüche, **dadurch gekennzeichnet, dass** die Teile, die untereinander durch den Verbindungsteil (54) verbunden sind, Ausstülpungen (52) aufweisen, die das Eingreifen in den Verbindungsteil (54) sicherstellen.

7. Vorrichtung zum Erfassen des Totpunkts nach einem der vorhergehenden Ansprüche, **dadurch gekennzeichnet, dass** das Ziel (46) einen metallischen Schaft aufweist.

8. Vorrichtung zum Erfassen des Totpunkts nach einem der vorhergehenden Ansprüche, **dadurch gekennzeichnet, dass** der Verbindungsteil (54) durch Abformen eines Plastiks der Familie der Polyamide hergestellt ist.

9. Vorrichtung zum Erfassen des Totpunkts nach einem der vorhergehenden Ansprüche, **dadurch gekennzeichnet, dass** der Positionssensor (26) ein Halleffekt-Sensor ist.
